Europäisches Patentamt

European Patent Office

Office européen des brevets

(19)

(11) Veröffentlichungsnummer: **0 150 282**
**A1**

(12) # EUROPÄISCHE PATENTANMELDUNG

(21) Anmeldenummer: **84113484.4**

(51) Int. Cl.⁴: **B 01 D 53/34**

(22) Anmeldetag: **08.11.84**

(30) Priorität: **06.12.83 DE 3343962**

(43) Veröffentlichungstag der Anmeldung: **07.08.85**
**Patentblatt 85/32**

(84) Benannte Vertragsstaaten: **AT BE CH DE FR GB IT LI NL SE**

(71) Anmelder: **Degussa Aktiengesellschaft, Weissfrauenstrasse 9, D-6000 Frankfurt am Main 1 (DE)**

(72) Erfinder: **Kürzinger, Karl, Dr., Lilienstrasse 14, D-6450 Hanau 8 (DE)**
Erfinder: **Soldavini, Heinz, Dipl.-Ing., Langener Strasse 44, D-6082 Mörfelden-Walldorf (DE)**
Erfinder: **Schwab, Heinrich, Dr. Dipl.-Chem., Heinrich-Zinss-Weg 4, D-6000 Frankfurt 60 (DE)**

(54) **Verfahren zur Entfernung von Schwefeldioxid aus Rauchgasen.**

(57) Nach der jüngsten Gesetzgebung zur Reinhaltung der Luft müssen Verfahren zur Rauchgasentschwefelung entwickelt werden, die kostengünstig arbeiten, hohe Reinigungsgrade erreichen und bei denen keine Sekundärabfälle anfallen. Ein solches Verfahren besteht darin, daß man die heißen Rauchgase in einer ersten Stufe mit 10 bis 50%iger Schwefelsäure wäscht und die auf 100 bis 170 °C abgekühlten Rauchgase in einer zweiten Stufe ebenfalls mit einer 10 bis 50%igen Schwefelsäure behandelt, der Wasserstoffperoxid beigemischt ist.

EP 0 150 282 A1

83 209 VT

Degussa Aktiengesellschaft
Weissfrauenstraße 9, 6000 Frankfurt/Main

## Verfahren zur Entfernung von Schwefeldioxid aus Rauchgasen

Die Erfindung betrifft ein Verfahren zur Entfernung von Schwefeldioxid aus Rauchgasen von Feuerungsanlagen durch Auswaschen mit einer oxidierend wirkenden Flüssigkeit.

Durch die jüngste Gesetzgebung auf dem Gebiet der Luftreinhaltung (Großfeuerungsanlagenverordnung, TA-Luft) ist es notwendig geworden, die Rauchgase von Großfeuerungsanlagen möglichst weitgehend von Schwefeldioxid zu befreien.

Die heute am meisten angewandten Verfahren zur Rauchgasentschwefelung bestehen im Auswaschen der Rauchgase mit wässrigen Suspensionen oder Lösungen von gelöschtem Kalk ($Ca(OH)_2$). Diese Prozesse liefern eine große Menge fester Abfälle, die meist kostenaufwendig deponiert werden müssen.

Aus der GB-PS 20 45 218 ist ein Verfahren bekannt, bei dem die schwefeldioxidhaltigen Rauchgase mit bromhaltigem Wasser in Berührung gebracht werden, wobei neben Schwefelsäure auch Bromwasserstoff entsteht, der in einer weiteren Verfahrensstufe elektrolytisch wieder in Wasserstoff und Brom zerlegt werden muß. Abgesehen davon, daß das Arbeiten mit Brom und Bromwasserstoff umweltbelastend ist, ist die Bromwasserstoffelektrolyse kostenaufwendig und der anfallende Wasserstoff meist nicht am Ort verwertbar.

Es war daher Aufgabe der vorliegenden Erfindung, ein Verfahren zur Entfernung von Schwefeldioxid aus Rauchgasen von Feuerungsanlagen durch Auswaschen mit einer oxidierend wirkenden Flüssigkeit zu entwickeln, das hohe Reinigungsgrade erreicht, leicht zu handhaben und umweltfreundlich ist und bei dem außer Schwefelsäure keine Sekundärprodukte entstehen, die beseitigt werden müssen.

Diese Aufgabe wurde erfindungsgemäß dadurch gelöst, daß die heißen Rauchgase in einer ersten Stufe mit 10 bis 50 %iger Schwefelsäure gewaschen und so auf 100 bis 170$^{\circ}$ C abgekühlt in einer zweiten Stufe mit einer ebenfalls 10 bis 50 %igen, mit Wasserstoffperoxid versetzten Schwefelsäure nochmals in innigen Kontakt gebracht werden.

Hierzu wird das vorzugsweise 120 bis 250$^{\circ}$ C heiße, gegebenenfalls über einen Wärmetauscher gekühlte und weitgehend von Flugasche befreite Rauchgas normalerweise in einem Wäscher im Gleich- oder Gegenstrom mit 10 bis 50 %iger Schwefelsäure gewaschen. Hierbei verdampft ein Teil des in der Schwefelsäure enthaltenen Wassers, so daß im Sumpf des Wäschers, je nach Arbeitsweise, eine 70 bis 95 %ige Schwefelsäure anfällt. Bei dieser Wäsche wird das Rauchgas auf 100 bis 170$^{\circ}$ C, insbesondere auf 140 bis 160$^{\circ}$ C, abgekühlt und auch vom größten Teil der noch vorhandenen

- 3 -

0150282

Flugasche befreit. Die so aufkonzentrierte Schwefelsäure wird zum Teil aus dem Sumpf abgezogen und kann
an derer Stelle verwertet werden.

Das so vorbehandelte und abgekühlte Rauchgas wird
in einen zweiten Wäscher eingeleitet, wo es im
Gleich- oder Gegenstrom mit einer ebenfalls 10 bis
50 %igen, Wasserstoffperoxid als Oxidationsmittel
enthaltenden Schwefelsäure gewaschen wird. Die Menge
des Wasserstoffperoxidzusatzes richtet sich dabei
nach dem Schwefeldioxidgehalt im Rauchgas. Vorzugsweise enthält die Schwefelsäure 1 bis 20 g/l Wasserstoffperoxid. Das Schwefeldioxid reagiert dabei mit
dem Wasserstoffperoxid zu Schwefelsäure, die sich
im Wäschersumpf ansammelt. Dabei werden gleichzeitig
auch Teile des Stickoxidanteils aus den Rauchgasen
mit ausgewaschen, so daß auch der Stickoxidanteil der
abgehenden Rauchgase vermindert ist. Die so gereinigten Rauchgase enthalten weniger als 20 ppm Schwefeldioxid, unabhängig vom Schwefeldioxidgehalt der Rauchgase beim Eintritt in die Wäscher.

Die im Sumpf des zweiten Wäschers sich ansammelnde
Schwefelsäure wird vorzugsweise im Kreislauf gefahren und über einen Wärmetauscher so in ihrer Temperatur geregelt, daß sich durch Kondensation des
Wasserdampfes aus dem Rauchgas eine 10 bis 50 %ige
Schwefelsäurekonzentration im Wäscher einstellt. Die
überschüssige Säure wird in den ersten Wäscher überführt und dient dort als Waschflüssigkeit für die
ankommenden Rauchgase, wobei sie aufkonzentriert
wird.

Folgende Beispiele sollen das erfindungsgemäße Verfahren näher erläutern:

1. Das Rauchgas einer Kohlefeuerungsanlage, die mit einer schwefelhaltigen Kohle von 0,8 bis 1 % S betrieben wird, enthält rund 1,2 g/m$^3$ Schwefeldioxid. Dieses wurde in einem Wärmetauscher auf 180$^o$ C abgekühlt und in eine übliche Waschkolonne eingeleitet, wo es mit einer 40 %igen Schwefelsäure besprüht wurde. Bei vorgegebenem Rauchgasdurchsatz wurde die pro Zeiteinheit versprühte Schwefelsäuremenge so eingestellt, daß die Rauchgastemperatur am Ende der Kolonne rund 145$^o$ C betrug. Im Kolonnensumpf sammelte sich eine 82 %ige Schwefelsäure, die abgezogen und an anderer Stelle verwertet werden konnte. Das so vorbehandelte Rauchgas mit einer Temperatur von 145$^o$ C wurde anschließend in eine zweite Waschkolonne eingeleitet und mit einer 40 %igen Schwefelsäure besprüht, die 3 g/l Wasserstoffperoxid enthielt. Die im Sumpf sich ansammelnde Säure wurde im Kreislauf über einen Wärmetauscher gepumpt und auf eine Temperatur von 55$^o$ C eingestellt. Dadurch erreichte man, daß aus dem Rauchgas gerade so viel Wasser auskondensierte, daß eine Schwefelsäurekonzentration von 40 % aufrechterhalten wurde. Das verbrauchte Wasserstoffperoxid wurde ständig nachdosiert. Die überschüssige, durch Reaktion zwischen Schwefeldioxid und Wasserstoffperoxid entstehende Säure wurde in die erste Waschkolonne überführt und dort aufkonzentriert. Das mit einer Temperatur von 55$^o$ C abgehende gereinigte Rauchgas enthielt weniger als 20 ppm Schwefeldioxid ($<$ 50 mg/m$^3$).

2. In der gleichen Anlage und unter den gleichen Bedingungen wie in Beispiel 1 wurde ein Rauchgas aus

- 5 -                    0150282

einer Schwerölfeuerung behandelt, wobei das Rauchgas 4 g/m$^3$ Schwefeldioxid enthielt und der Schwefelsäure der zweiten Stufe 15 g/l Wasserstoffperoxid
zugesetzt wurden. Auch hier enthielt das gereinigte
Rauchgas weniger als 20 ppm Schwefeldioxid.

3. Rauchgase aus der Kohlefeuerung nach Beispiel 1
werden unter den gleichen Bedingungen wie in Beispiel 1 mit 15 %iger Schwefelsäure besprüht, die
im ersten Wäscher auf 70 % aufkonzentriert wurde.
Im zweiten Wäscher wurde der Schwefelsäure 5 g/l
Wasserstoffperoxid zudosiert. Das gereinigte Rauchgas enthielt weniger als 20 ppm Schwefeldioxid.

4. Analog Beispiel 3 wurden die Rauchgase mit 30 %iger
Schwefelsäure besprüht. In der ersten Waschkolonne
entstand eine 78 %ige Schwefelsäure, in der zweiten
Waschkolonne wurden der Schwefelsäure 10 g/l Wasserstoffperoxid zudosiert. Auch hier enthielt das gereinigte Rauchgas weniger als 20 ppm Schwefeldioxid.

0150282

83 209 VT

Degussa Aktiengesellschaft
Weissfrauenstraße 9, 6000 Frankfurt/Main


Patentansprüche:


1. Verfahren zur Entfernung von Schwefeldioxid aus Rauchgasen von Feuerungsanlagen durch Auswaschen mit einer oxidierend wirkenden Flüssigkeit, dadurch gekennzeichnet, daß die heißen Rauchgase in einer ersten Stufe mit 10 bis 50 %iger Schwefelsäure gewaschen und so auf 100 bis 170° C abgekühlt in einer zweiten Stufe mit einer ebenfalls 10 bis 50 %igen, mit Wasserstoffperoxid versetzten Schwefelsäure nochmals in innigen Kontakt gebracht werden.

2. Verfahren zur Entfernung von Schwefeldioxid aus Rauchgasen nach Anspruch 1, dadurch gekennzeichnet, daß die Schwefelsäure in der zweiten Stufe 1 bis 20 g/l Wasserstoffperoxid enthält.

3. Verfahren zur Entfernung von Schwefeldioxid aus Rauchgasen nach Anspruch 1 und 2, dadurch gekennzeichnet, daß die Schwefelsäure der zweiten Stufe im Kreislauf gefahren, durch Regelung der Temperatur eine Konzentrationseinstellung auf 10 bis 50 % erreicht und die überschüssige Schwefelsäure in die erste Stufe überführt wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 148 244 (L'AIR LIQUIDE, S.A.) <br> * Ansprüche 1,3-5,11,12; Beispiele 1,2 * | 1-3 | B 01 D 53/34 |
| | --- | | |
| A | DE-B-1 234 912 (DR. C. OTTO & COMP. GMBH) <br> * Vollständiges Dokument * | 1-3 | |
| | --- | | |
| A | FR-A-2 106 950 (L'AIR LIQUIDE, S.A.) <br> * Ansprüche 1-8 * | | |
| | ----- | | |

RECHERCHIERTE SACHGEBIETE (Int. Cl.4)

B 01 D 53/00

Der vorliegende Recherchenbericht wurde für alle Patentansprüche erstellt.

| Recherchenort <br> BERLIN | Abschlußdatum der Recherche <br> 28-03-1985 | Prüfer <br> BERTRAM H E H |
|---|---|---|